# EUROPEAN PATENT SPECIFICATION

(11) **EP 3 448 675 B1**
(45) Date of publication and mention of the grant of the patent: **25.11.2020**
(21) Application number: 17718126.0
(22) Date of filing: 20.03.2017
(51) Int. Cl.: B32B 27/08, B32B 1/08, B32B 25/08, B32B 25/16, B32B 27/20, B32B 27/28, B32B 27/30, B32B 27/32, C08L 25/06, C08L 71/12

(54) **POLY(PHENYLENE ETHER) COMPOSITION, LINED PIPE AND INJECTION MOLDED ARTICLE PREPARED THEREFROM, AND METHOD OF CONTROLLING MICROBIAL GROWTH DURING WATER TRANSPORTATION AND STORAGE**
POLY(PHENYLENETHER)-ZUSAMMENSETZUNG, AUSGEKLEIDETES ROHR UND DARAUS HERGESTELLTER SPRITZGIESSARTIKEL UND VERFAHREN ZUR KONTROLLE DES MIKROBIELLEN WACHSTUMS WÄHREND DES WASSERTRANSPORTS UND DER LAGERUNG
COMPOSITION DE POLY(PHÉNYLÈNE ÉTHER), TUYAU REVÊTU ET ARTICLE MOULÉ PAR INJECTION PRÉPARÉS À PARTIR DE CETTE DERNIÈRE, ET PROCÉDÉ DE CONTRÔLE DE LA CROISSANCE MICROBIENNE PENDANT UN TRANSPORT ET UN STOCKAGE D'EAU

(30) Priority: 29.04.2016 US 201662329348 P
(43) Date of publication of application: 06.03.2019
(73) Proprietor: SABIC Global Technologies B.V., 4612 PX Bergen op Zoom (NL)
(72) Inventor: KOEVOETS, Christiaan Henricus Johannes, 4612 PX Bergen op Zoom (NL); FORTUIJN, Johannes E., 4612 PX Bergen op Zoom (NL)
(74) Representative: Lang, Johannes
(86) International application number: PCT/IB2017/051609
(87) International publication number: WO 2017/187283

(56) References cited:
- EP-A1- 1 291 387
- WO-A1-2016/142803

## Description

### BACKGROUND OF THE INVENTION

Plastic materials used to transport or store water can release components that stimulate bacterial growth. The bacteria can pose a health risk to humans and livestock that consume the water. To control bacterial growth, disinfection agents such as chlorine or chlorine dioxide are typically added to drinking water. However, in long term use, the plastic materials used to form pipes, fittings, and storage vessels can be chemically attacked by chlorine and chlorine derivatives. There is therefore a desire for pipes, fittings, and storage vessels that cause less stimulation of bacterial growth and therefore enable reduced chlorination of drinking water.

EP 1 291 387 A1 discloses a heat resistant pipe formed from a composition comprising based on the total weight of the composition about 5 to about 95 wt% polyphenylene ether resin; and about 5 to about 95 wt% polystyrene resin.

### BRIEF SUMMARY OF EMBODIMENTS OF THE INVENTION

One embodiment is a lined pipe for transporting water, comprising: an outer layer comprising an outer layer composition comprising, based on the total weight of the outer layer composition, 50 to 100 weight percent of a thermoplastic selected from the group consisting of crosslinked polyethylene, polypropylene, poly(1-butene), and poly(vinyl chloride), and 0 to 50 weight percent filler; and an inner layer comprising an inner layer composition comprising 20 to 70 parts by weight of a poly(phenylene ether), 30 to 80 parts by weight of a polystyrene, and 0 to 15 parts by weight of a hydrogenated block copolymer of an alkenyl aromatic monomer and a conjugated diene; wherein the parts by weight are based on 100 parts by weight total of the poly(phenylene ether), the polystyrene, and the hydrogenated block copolymer.

Another embodiment is an injection molded article for water contact, the article comprising a composition comprising: 30 to 50 parts by weight of a poly(2,6-dimethyl-1,4-phenylene ether) having an intrinsic viscosity of 0.1 to 0.6 deciliter per gram measured by Ubbelohde viscometer at 25 °C in chloroform; 35 to 55 parts by weight of an atactic homopolystyrene having a having a melt flow index of 1 to 5 grams per 10 minutes measured according to ISO 1133-4 (2011) at 200 °C and 5 kilogram load; and 1 to 15 parts by weight of a hydrogenated polystyrene-poly(ethylene-butylene)-polystyrene triblock copolymer; and 5 to 100 parts by weight of glass fibers; wherein parts by weight are based on 100 parts by weight total of the poly(phenylene ether), the polystyrene, and the hydrogenated block copolymer; wherein the composition excludes rubber-modified polystyrene, excludes unhydrogenated block copolymers of styrene and butadiene, and comprises less than 1 part per million by weight of free butadiene, based on the total weight of the inner layer composition; and wherein the composition exhibits a Biomass Production Potential less than or equal to 500 picograms adenosine triphosphate per centimeter² determined according to NEN-EN 16421:2014 method 1.

Another embodiment is a method of controlling microbial growth during transportation or storage of water, the method comprising transporting or storing the water in contact with a surface having a composition comprising 20 to 70 parts by weight of a poly(phenylene ether), 30 to 80 parts by weight of a polystyrene, and 1 to 15 parts by weight of a hydrogenated block copolymer of an alkenyl aromatic monomer and a conjugated diene; wherein the parts by weight are based on 100 parts by weight total of the poly(phenylene ether), the polystyrene, and the hydrogenated block copolymer.

Another embodiment is a composition, comprising, 30 to 50 parts by weight of a poly(2,6-dimethyl-1,4-phenylene ether) having an intrinsic viscosity of 0.1 to 0.6 deciliter per gram measured by Ubbelohde viscometer at 25 °C in chloroform; 35 to 55 parts by weight of an atactic homopolystyrene having a having a melt flow index of 1 to 5 grams per 10 minutes measured according to ISO 1133-4 (2011) at 200 °C and 5 kilogram load; and 1 to 15 parts by weight of a hydrogenated block copolymer of an alkenyl aromatic monomer and a conjugated diene; and 5 to 100 parts by weight of glass fibers; wherein parts by weight are based on 100 parts by weight total of the poly(phenylene ether), the polystyrene, and the hydrogenated block copolymer; wherein the composition excludes rubber-modified polystyrene, excludes unhydrogenated block copolymers of styrene and butadiene, and comprises less than 1 part per million by weight of free butadiene, based on the total weight of the inner layer composition; and wherein the composition exhibits a Biomass Production Potential less than or equal to 500 picograms adenosine triphosphate per centimeter² determined according to NEN-EN 16421:2014 method 1.

These and other embodiments are described in detail below.

### BRIEF DESCRIPTION OF THE DRAWINGS

Referring now to the drawings wherein like elements are numbered alike in several FIGURES.
Figure 1 is a cross-sectional view of a lined pipe 10 comprising an outer layer 20 and an inner layer 30.
Figure 2 is a cross-sectional view of a lined pipe 10 comprising an outer layer 20, an inner layer 30, and an intermediate layer 40.
Figure 3 is a cross-sectional view of a lined pipe 10 comprising an outer layer 20, an inner layer 30, and two intermediate layers 40.
Figures 4A - 4C show atomic force micrographs for as-extruded surfaces of high density polyethylene (4A), a poly(phenylene ether) composition (4B), and unplasticized poly(vinyl chloride) (4C).

### DETAILED DESCRIPTION OF THE INVENTION

The present inventors have determined that particular poly(phenylene ether) compositions exhibit very low stimulation of bacterial growth. The compositions can be employed as an inner lining on pipes, as an injection molded article for water contact, and in general as surfaces for contact with drinking water.

Thus, one embodiment is a lined pipe for transporting water, comprising: an outer layer comprising an outer layer composition comprising, based on the total weight of the outer layer composition, 50 to 100 weight percent of a thermoplastic selected from the group consisting of crosslinked polyethylene, polypropylene, poly(1-butene), and poly(vinyl chloride), and 0 to 50 weight percent filler; and an inner layer comprising an inner layer composition comprising 20 to 70 parts by weight of a poly(phenylene ether), 30 to 80 parts by weight of a polystyrene, and 0 to 15 parts by weight of a hydrogenated block copolymer of an alkenyl aromatic monomer and a conjugated diene; wherein the parts by weight are based on 100 parts by weight total of the poly(phenylene ether), the polystyrene, and the hydrogenated block copolymer.

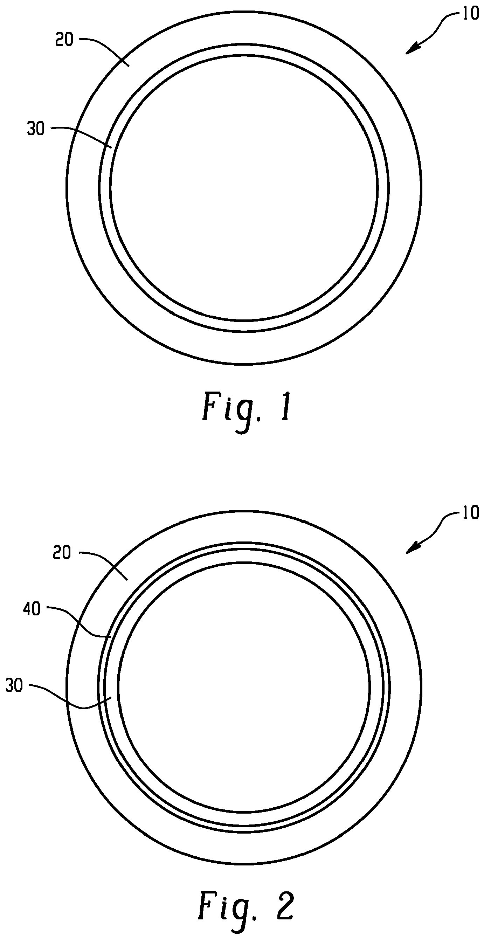

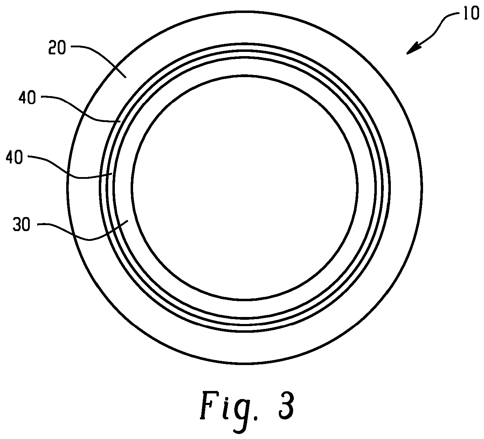

One embodiment relates to a lined pipe. One embodiment, illustrated in Figure 1, is a pipe 10 comprising an outer layer 20 and an inner layer 30. Another embodiment, illustrated in Figure 2, is a pipe 10 comprising an outer layer 20, an inner layer 30, and an intermediate layer 40 between the outer layer 20 and the inner layer 30. Another embodiment, illustrated in Figure 3, is a pipe 10 comprising an outer layer 20, an inner layer 30, and two intermediate layers 40, each between the outer layer 20 and the inner layer 30. When there are two or more intermediate layers, they can have compositions that are the same as or different from each other. The compositions of the various layers are described in detail below.

The lined pipe can vary widely in size. For example, in some embodiments the outer layer has an outer diameter of 20 millimeters to 1.6 meters and a ratio of outer diameter to wall thickness of 7:1 to 45:1. In these embodiments, the inner layer can, optionally, have an outer diameter of 12 millimeters to 1.55 meters and/or a wall thickness of 50 micrometers to one-third the wall thickness of the outer layer.

The lined pipe includes an outer layer based on a thermoplastic selected from the group consisting of crosslinked polyethylene, polypropylene, poly(1-butene), and poly(vinyl chloride). In some embodiments, the thermoplastic is selected from the group consisting of crosslinked polyethylene, polypropylene, poly(1-butene), and poly(vinyl chloride). In some embodiments, the thermoplastic is polypropylene (i.e., propylene homopolymer). The composition of the outer layer comprises 50 to 100 weight percent of the thermoplastic, based on the total weight of the outer layer composition. Within this range, the thermoplastic content can be 70 to 100 weight percent, or 80 to 100 weight percent, or 90 to 100 weight percent, or 95 to 100 weight percent. Other than the thermoplastic, the outer layer composition can, optionally, include up to 50 weight percent of fillers. Suitable fillers include talc, clay, mica, calcium carbonate, and combinations thereof. Within the range of 0 to 50 weight percent, the filler amount can be 5 to 50 weight percent, or 5 to 40 weight percent, or 5 to 30 weight percent. The outer layer composition can, optionally, further include up to 10 weight percent of additives selected from the group consisting of colorants, UV blockers, antioxidants, stabilizers, processing aids, and combinations thereof. Within the limit of 10 weight percent, the additive amount can be 0 to 5 weight percent, or 0 to 2 weight percent.

In addition to the outer layer, the lined pipe or fitting includes an inner layer exhibiting low stimulation of bacterial growth. The composition of the inner layer comprises a poly(phenylene ether). The poly(phenylene ether) comprises repeat units of the formula 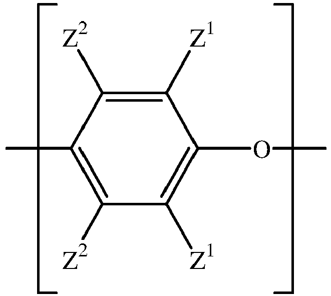 wherein each occurrence of Z¹ is independently C₁-C₁₂ hydrocarbylthio, C₁-C₁₂ hydrocarbyloxy, or unsubstituted or substituted C₁-C₁₂ hydrocarbyl provided that the hydrocarbyl group is not tertiary hydrocarbyl; and each occurrence of Z² is independently hydrogen, C₁-C₁₂ hydrocarbylthio, C₁-C₁₂ hydrocarbyloxy, or unsubstituted or substituted C₁-C₁₂ hydrocarbyl provided that the hydrocarbyl group is not tertiary hydrocarbyl. As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. When the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. As one example, Z¹ can be a di-n-butylaminomethyl group formed by reaction of a terminal 3,5-dimethyl-1,4-phenyl group with the di-n-butylamine component of an oxidative polymerization catalyst.

The poly(phenylene ether) can comprise molecules having aminoalkyl-containing end group(s), typically located in a position ortho to the hydroxyl group. Also frequently present are tetramethyldiphenoquinone (TMDQ) end groups, typically obtained from 2,6-dimethylphenol-containing reaction mixtures in which tetramethyldiphenoquinone by-product is present. The poly(phenylene ether) can be in the form of a homopolymer, a copolymer, a graft copolymer, an ionomer, or a block copolymer, as well as combinations thereof.

In some embodiments, the poly(phenylene ether) has an intrinsic viscosity of 0.1 to 1 deciliter per gram measured by Ubbelohde viscometer at 25°C in chloroform. Within this range, the poly(phenylene ether) intrinsic viscosity can be 0.1 to 0.6 deciliter per gram, 0.2 to 0.6 deciliter per gram, or 0.25 to 0.55 deciliter per gram.

In some embodiments, the poly(phenylene ether) comprises a homopolymer or copolymer of monomers selected from the group consisting of 2,6-dimethylphenol, 2,3,6-trimethylphenol, and combinations thereof. In some embodiments, the poly(phenylene ether) comprises a poly(2,6-dimethyl-1,4-phenylene ether) having an intrinsic viscosity of 0.1 to 0.6 deciliter per gram, measured at 25 °C in chloroform.

The inner layer composition comprises 20 to 70 parts by weight of the poly(phenylene ether), based on 100 parts by weight total of the poly(phenylene ether), the polystyrene, and the hydrogenated block copolymer. Within the range of 20 to 70 parts by weight, the poly(phenylene ether) amount can be 30 to 60 parts by weight, or 30 to 50 parts by weight.

In addition to the poly(phenylene ether), the inner layer composition comprises polystyrene. As used herein, the term polystyrene means a homopolymer of styrene. The polystyrene can be atactic, syndiotactic, or isotactic, or a combination thereof. In some embodiments, the polystyrene comprises atactic homopolystyrene. In some embodiments, the polystyrene comprises an atactic homopolystyrene having a having a melt flow index of 1 to 5 grams per 10 minutes, or 1.5 to 5 grams per 10 minutes, or 1.5 to 3.5 grams per 10 minutes, or 1.9 to 2.9 grams per 10 minutes, measured according to ISO 1133-4 (2011) at 200 °C and 5 kilogram load. In some embodiments, the polystyrene excludes syndiotactic homopolystyrene.

The inner layer composition comprises 30 to 80 parts by weight of the polystyrene, based on 100 parts by weight total of the poly(phenylene ether), the polystyrene, and the hydrogenated block copolymer. Within the range of 30 to 80 parts by weight, the polystyrene amount can be 40 to 70 parts by weight, or 40 to 60 parts by weight.

In some embodiments, the inner layer composition comprises a hydrogenated block copolymer of an alkenyl aromatic monomer and a conjugated diene. For brevity, this component is referred to as the "hydrogenated block copolymer". The hydrogenated block copolymer can comprise 10 to 90 weight percent of poly(alkenyl aromatic) content and 90 to 10 weight percent of hydrogenated poly(conjugated diene) content, based on the weight of the hydrogenated block copolymer. In some embodiments, the hydrogenated block copolymer is a low poly(alkenyl aromatic content) hydrogenated block copolymer in which the poly(alkenyl aromatic) content is 10 to less than 40 weight percent, or 20 to 35 weight percent, or 25 to 35 weight percent, all based on the weight of the low poly(alkenyl aromatic content) hydrogenated block copolymer. In other embodiments, the hydrogenated block copolymer is a high poly(alkenyl aromatic) content hydrogenated block copolymer in which the poly(alkenyl aromatic) content is 40 to 90 weight percent, or 50 to 80 weight percent, or 60 to 70 weight percent, all based on the weight of the high poly(alkenyl aromatic content) hydrogenated block copolymer.

In some embodiments, the hydrogenated block copolymer has a weight average molecular weight of 40,000 to 400,000 atomic mass units. The number average molecular weight and the weight average molecular weight can be determined by gel permeation chromatography and based on comparison to polystyrene standards. In some embodiments, the hydrogenated block copolymer has a weight average molecular weight of 200,000 to 400,000 atomic mass units.

The alkenyl aromatic monomer used to prepare the hydrogenated block copolymer can have the structure 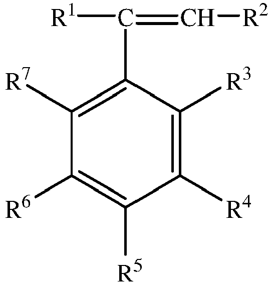 wherein R¹ and R² each independently represent a hydrogen atom, a C₁-C₈ alkyl group, or a C₂-C₈ alkenyl group; R³ and R⁷ each independently represent a hydrogen atom or a C₁-C₈ alkyl group; and R⁴, R⁵, and R⁶ each independently represent a hydrogen atom, a C₁-C₈ alkyl group, or a C₂-C₈ alkenyl group, or R⁴ and R⁵ are taken together with the central aromatic ring to form a naphthyl group, or R⁵ and R⁶ are taken together with the central aromatic ring to form a naphthyl group. Specific alkenyl aromatic monomers include, for example, styrene, methylstyrenes such as alpha-methylstyrene and p-methylstyrene, and t-butylstyrenes such as 3-t-butylstyrene and 4-t-butylstyrene. In some embodiments, the alkenyl aromatic monomer is styrene.

The conjugated diene used to prepare the hydrogenated block copolymer can be a C₄-C₂₀ conjugated diene. Suitable conjugated dienes include, for example, 1,3-butadiene, 2-methyl-1,3-butadiene, 2-chloro-1,3-butadiene, 2,3-dimethyl-1,3-butadiene, 1,3-pentadiene, 1,3-hexadiene, and combinations thereof. In some embodiments, the conjugated diene is 1,3-butadiene, 2-methyl-1,3-butadiene, or a combination thereof. In some embodiments, the conjugated diene is 1,3-butadiene.

The hydrogenated block copolymer is a copolymer comprising (A) at least one block derived from an alkenyl aromatic compound and (B) at least one block derived from a conjugated diene, in which the aliphatic unsaturated group content in the block (B) is at least partially reduced by hydrogenation. In some embodiments, the aliphatic unsaturation in the (B) block is reduced by at least 50 percent, or at least 70 percent. The arrangement of blocks (A) and (B) includes a linear structure, a grafted structure, and a radial teleblock structure with or without a branched chain. Linear block copolymers include tapered linear structures and non-tapered linear structures. In some embodiments, the hydrogenated block copolymer has a tapered linear structure. In some embodiments, the hydrogenated block copolymer has a non-tapered linear structure. In some embodiments, the hydrogenated block copolymer comprises a (B) block that comprises random incorporation of alkenyl aromatic monomer. Linear block copolymer structures include diblock (A-B block), triblock (A-B-A block or B-A-B block), tetrablock (A-B-A-B block), and pentablock (A-B-A-B-A block or B-A-B-A-B block) structures as well as linear structures containing 6 or more blocks in total of (A) and (B), wherein the molecular weight of each (A) block can be the same as or different from that of other (A) blocks, and the molecular weight of each (B) block can be the same as or different from that of other (B) blocks. In some embodiments, the hydrogenated block copolymer is a diblock copolymer, a triblock copolymer, or a combination thereof.

In some embodiments, the hydrogenated block copolymer consists of blocks derived from the alkenyl aromatic compound and the conjugated diene. It does not comprise grafts formed from these or any other monomers. It also consists of carbon and hydrogen atoms and therefore excludes heteroatoms. In other embodiments, the hydrogenated block copolymer includes the residue of one or more acid functionalizing agents, such as maleic anhydride.

In some embodiments, the hydrogenated block copolymer comprises a polystyrene-poly(ethylene-butylene)-polystyrene triblock copolymer having a weight average molecular weight of 200,000 to 400,000 grams/mole.

Methods for preparing hydrogenated block copolymers are known in the art and many hydrogenated block copolymers are commercially available. Illustrative commercially available hydrogenated block copolymers include the polystyrene-poly(ethylene-propylene) diblock copolymers available from Kraton Performance Polymers Inc. as KRATON™ G1701 (having about 37 weight percent polystyrene) and G1702 (having about 28 weight percent polystyrene); the polystyrene-poly(ethylene-butylene)-polystyrene triblock copolymers available from Kraton Performance Polymers Inc.as KRATON™ G1641 (having about 33 weight percent polystyrene), G1650 (having about 30 weight percent polystyrene), G1651 (having about 33 weight percent polystyrene), and G1654 (having about 31 weight percent polystyrene); and the polystyrene-poly(ethylene-ethylene/propylene)-polystyrene triblock copolymers available from Kuraray as SEPTON™ S4044, S4055, S4077, and S4099. Additional commercially available hydrogenated block copolymers include polystyrene-poly(ethylene-butylene)-polystyrene (SEBS) triblock copolymers available from Dynasol as CALPRENE™ H6140 (having about 31 weight percent polystyrene), H6170 (having about 33 weight percent polystyrene), H6171 (having about 33 weight percent polystyrene), and H6174 (having about 33 weight percent polystyrene); and from Kuraray as SEPTON™ 8006 (having about 33 weight percent polystyrene) and 8007 (having about 30 weight percent polystyrene); polystyrene-poly(ethylene-propylene)-polystyrene (SEPS) copolymers available from Kuraray as SEPTON™ 2006 (having about 35 weight percent polystyrene) and 2007 (having about 30 weight percent polystyrene); and oil-extended compounds of these hydrogenated block copolymers available from Kraton Performance Polymers Inc.as KRATON™ G4609 (containing about 45% mineral oil, and the SEBS having about 33 weight percent polystyrene) and G4610 (containing about 31% mineral oil, and the SEBS having about 33 weight percent polystyrene); and from Asahi as TUFTEC™ H1272 (containing about 36% oil, and the SEBS having about 35 weight percent polystyrene). Mixtures of two of more hydrogenated block copolymers can be used.

In some embodiments, the hydrogenated block copolymer is a food grade hydrogenated block copolymer. In the US, substances used in food contact articles are defined and regulated according to 31 CFR 170.39. Under the European Food Safety Authority, general requirements for all food contact materials are defined in Framework Regulation EC 1935/2004; Good Manufacturing Practice for materials and articles intended to come in contact with food is described in Regulation EC 2023/2006. Food grade hydrogenated block copolymers include KRATON™ G1650, G1651, G1652, G1654, and G1657, which are all polystyrene-poly(ethylene-butylene)-polystyrene triblock copolymers available from Kraton Performance Polymers Inc.

When present in the inner layer composition, the hydrogenated block copolymer can be used in an amount of 1 to 15 parts by weight, based on 100 parts by weight total of the poly(phenylene ether), the polystyrene, and the hydrogenated block copolymer. Within this range, the hydrogenated block copolymer amount can be 2 to 15 parts by weight, or 5 to 15 parts by weight, or 8 to 14 parts by weight.

In some embodiments, the inner layer composition comprises less than 1 part per million by weight of free butadiene, based on the total weight of the inner layer composition. The presence of free (unpolymerized) butadiene is generally associated with the presence of unhydrogenated polymers and copolymers comprising polybutadiene. For example, including in the inner layer composition a polybutadiene-containing rubber-modified polystyrene can make it difficult to achieve a free butadiene concentration less than 1 part per million. The term "rubber-modified polystyrene" as used herein refers to the product of combining styrene-butadiene random copolymer and/or polybutadiene with polystyrene, either during or after polymerization of the polystyrene, such that the finished basic polymers contains not less than 80 weight percent of total polymer units derived from styrene monomer. Rubber-modified polystyrene is distinct from styrene-butadiene block copolymers. In some embodiments, the inner layer composition excludes rubber-modified polystyrene. It should be noted that it is possible to achieve a free butadiene content less than 1 part per million while still including in the inner layer composition hydrogenated polymers and copolymers in which polybutadiene has been hydrogenated.

The inner layer composition can, optionally, further comprise one or more additives known in the thermoplastics art. For example, the inner layer composition can, optionally, further comprise an additive selected from the group consisting of stabilizers, mold release agents, lubricants, processing aids, UV blockers, dyes, pigments, antioxidants, anti-static agents, mineral oil, metal deactivators, and combinations thereof. When present, such additives are typically used in a total amount of less than or equal to 10 parts by weight, or less than or equal to 5 parts by weight, or less than or equal to 2 parts by weight, based on 100 parts by weight total of the poly(phenylene ether), the polystyrene, and the hydrogenated block copolymer.

The outer layer composition and the inner layer composition can, optionally, minimize or exclude components not described herein as required or optional. In some embodiments, the outer layer composition and the inner layer composition exclude flame retardants (including organophosphate esters, metal dialkylphosphinates, bis(phenoxy)phosphazenes, melamine phosphates, melamine pyrophosphates, melamine polyphosphates, melamine cyanurates, metal hydroxides, and combinations thereof). In some embodiments, the inner layer composition comprises 0 to 2 parts by weight of (or excludes) rubber-modified polystyrenes. In some embodiments, the inner layer composition comprises 0 to 2 parts by weight of (or excludes) polyamides. In some embodiments, the inner layer composition comprises 0 to 2 parts by weight of (or excludes) of polyolefins. In some embodiments, the inner layer composition comprises 0 to 2 parts by weight of low density polyethylene and otherwise excludes polyolefins. All parts by weight are based on 100 parts by weight total of the poly(phenylene ether), the polystyrene, and the hydrogenated block copolymer.

One advantage of the inner layer is that its inner (exposed) surface can be relatively smooth. This can be quantified using the surface roughness parameters *Rₐ* and *R_{q}.* For example, in some embodiments, the inner layer comprises an inner surface having a roughness average, *Rₐ*, value of 3 to 15 nanometers, and a root mean square roughness, *R_{q}*, value of 7 to 25 nanometers. With the range of 3 to 15 nanometers, *Rₐ* can have a value of 5 to 10 nanometers. With the range of 7 to 25 nanometers, *R_{q}* can have a value of 10 to 20 nanometers. Methods of measuring surface roughness and calculating *Rₐ* and *R_{q}* parameters are known in the art. For example, as demonstrated in the working examples below, measurements can be performed using atomic force microscopy (AFM). Calculation of *Rₐ* and *R_{q}* values is described in T. V. Vorburger and J. Raja, "Surface Finish Metrology Tutorial", NISTIR 89-4088, June 1990, page 36, Figure 3-22.

In addition to the outer layer and the inner layer, the lined pipe can, optionally, include at least one intermediate layer disposed between the outer layer and the inner layer. In some embodiments, the lined pipe or fitting comprises two intermediate layers. In other embodiments, the lined pipe or fitting comprises three intermediate layers. The one or more intermediate layers can each independently comprise a material selected from the group consisting of aromatic epoxy resins, acid-functionalized polyolefins (including maleic anhydride-functionalized high density polyethylene), acid-functionalized poly(phenylene ether)s (including maleic anhydride-functionalized poly(phenylene ether)s), styrene-maleic anhydride copolymers, and combinations thereof.

In a very specific embodiment of the lined pipe, the outer layer composition comprises 95 to 100 weight percent polypropylene; the poly(phenylene ether) comprises a poly(2,6-dimethyl-1,4-phenylene ether) having an intrinsic viscosity of 0.1 to 0.6 deciliter per gram, measured at 25 °C in chloroform; the polystyrene comprises an atactic homopolystyrene having a melt flow index of 1.5 to 3.5 grams per 10 minutes measured according to ISO 1133-4 (2011) at 200 °C and 5 kilogram load; the inner layer composition comprises 1 to 15 parts by weight of the hydrogenated block copolymer; and wherein the hydrogenated block copolymer is a polystyrene-poly(ethylene-butylene)-polystyrene triblock copolymer having a polystyrene content of about 25 to 40 weight percent and a weight average molecular weight of about 200,000 to 400,000 grams/mole; and the inner layer composition comprises 35 to 45 parts by weight of the poly(phenylene ether), 43 to 53 parts by weight of the polystyrene, and 5 to 15 parts by weight of the hydrogenated block copolymer. In this embodiment, the inner layer composition can, optionally, comprise less than 1 part per million by weight of free butadiene. Also in this embodiment, the inner layer composition can, optionally, exclude rubber-modified polystyrene.

The lined pipe can be formed by coextrusion of the outer layer, the inner layer, and any intermediate layers. One embodiment is a method of forming a lined pipe or fitting, comprising: coextruding an outer layer and an inner layer; wherein the outer layer is annular in cross-section and characterized by a first outer diameter, a first inner diameter and a first wall thickness; wherein the outer layer comprises an outer layer composition comprising, based on the total weight of the outer layer composition, 50 to 100 weight percent of a thermoplastic selected from the group consisting of crosslinked polyethylene, polypropylene, poly(1-butene), and poly(vinyl chloride), and 0 to 50 weight percent filler; wherein the inner layer is annular in cross-section and characterized by a second outer diameter less than the first inner diameter, a second inner diameter, and a second wall thickness; wherein the inner layer comprises an inner layer composition comprising 20 to 70 parts by weight of a poly(phenylene ether), 30 to 80 parts by weight of a polystyrene, and 0 to 15 parts by weight of a hydrogenated block copolymer of an alkenyl aromatic monomer and a conjugated diene; wherein the parts by weight are based on 100 parts by weight total of the poly(phenylene ether), the polystyrene, and the hydrogenated block copolymer.

In some embodiments of the lined pipe, it consists of the outer layer and the inner layer, and the second outer diameter (i.e., the outer diameter of the inner layer) is 98 to less than 100 percent of the first inner diameter (i.e., the inner diameter of the outer layer), or 99 to less than 100 percent of the first inner diameter.

In other embodiments, the method further comprises coextruding with the outer layer and the inner layer at least one intermediate layer, annular in cross-section and characterized by a third outer diameter less than the first inner diameter and a third inner diameter greater than the second outer diameter.

In a very specific embodiment of the method of forming a lined pipe, the outer layer composition comprises 95 to 100 weight percent polypropylene; the poly(phenylene ether) comprises a poly(2,6-dimethyl-1,4-phenylene ether) having an intrinsic viscosity of 0.1 to 0.6 deciliter per gram, or 0.3 to 0.6 deciliter per gram, measured at 25 °C in chloroform; the polystyrene comprises an atactic homopolystyrene having a melt flow index of 1.5 to 3.5 grams per 10 minutes measured according to ISO 1133-4 (2011) at 200 °C and 5 kilogram load; the hydrogenated block copolymer comprises a polystyrene-poly(ethylene-butylene)-polystyrene triblock copolymer having a weight average molecular weight of 200,000 to 400,000 grams/mole; and the inner layer composition comprises 35 to 45 parts by weight of the poly(phenylene ether), 43 to 53 parts by weight of the polystyrene, and 5 to 15 parts by weight of the hydrogenated block copolymer. In this embodiment, the inner layer composition can, optionally, comprise less than 1 part per million by weight of free butadiene. Also in this embodiment, the inner layer composition can, optionally, exclude rubber-modified polystyrene.

Another embodiment is a an injection molded article for water contact, the article comprising a composition comprising: 30 to 50 parts by weight of a poly(2,6-dimethyl-1,4-phenylene ether) having an intrinsic viscosity of 0.1 to 0.6 deciliter per gram measured by Ubbelohde viscometer at 25 °C in chloroform; 35 to 55 parts by weight of an atactic homopolystyrene having a melt flow index of 1 to 5 grams per 10 minutes measured according to ISO 1133-4 (2011) at 200 °C and 5 kilogram load; and 1 to 15 parts by weight of a hydrogenated polystyrene-poly(ethylene-butylene)-polystyrene triblock copolymer; and 5 to 100 parts by weight of glass fibers; wherein parts by weight are based on 100 parts by weight total of the poly(phenylene ether), the polystyrene, and the hydrogenated block copolymer; wherein the composition excludes rubber-modified polystyrene, excludes unhydrogenated block copolymers of styrene and butadiene, and comprises less than 1 part per million by weight of free butadiene, based on the total weight of the inner layer composition; and wherein the composition exhibits a Biomass Production Potential less than or equal to 500 picograms adenosine triphosphate per centimeter² determined according to NEN-EN 16421:2014 method 1. All of the variations described above for the inner layer composition of the lined pipe apply as well to the composition used to form the injection molded article. In some embodiments, the poly(2,6-dimethyl-1,4-phenylene ether) has a weight average molecular weight of 25,000 to 60,000 grams/mole. In some embodiments, the injection molded article comprises a surface (e.g., a water-contacting surface) characterized by surface roughness parameters *Rₐ* having a value of 3 to 15 nanometers, and *R_{q}* having a value of 7 to 25 nanometers.

The composition used to form the injection molded article includes glass fibers. Suitable glass fibers include those based on E, A, C, ECR, R, S, D, and NE glasses, as well as quartz. In some embodiments, the glass fibers have a diameter of about 2 to about 30 micrometers, specifically about 5 to about 25 micrometers, more specifically about 10 to about 15 micrometers. In some embodiments, the length of the glass fibers before compounding is about 2 to about 7 millimeters, specifically about 3 to about 5 millimeters. The glass fibers can, optionally, include a so-called adhesion promoter to improve its compatibility with the poly(phenylene ether) and the polystyrene. Adhesion promoters include chromium complexes, silanes, titanates, zirco-aluminates, propylene maleic anhydride copolymers, reactive cellulose esters and the like. Suitable glass fibers are commercially available from suppliers including, for example, Owens Corning, Nippon Electric Glass, PPG, and Johns Manville. The glass fibers can be used in an amount of 5 to 100 parts by weight, or 5 to 80 parts by weight, or 5 to 75 parts by weight, or 5 to 50 parts by weight, or 10 to 40 parts by weight, or 20 to 30 parts by weight, based on 100 parts by weight total of the poly(phenylene ether), the polystyrene, and the hydrogenated block copolymer.

In a very specific embodiment of the injection molded article, the composition comprises 35 to 45 parts by weight of a poly(2,6-dimethyl-1,4-phenylene ether) having an intrinsic viscosity of 0.1 to 0.6 deciliter per gram, measured at 25 °C in chloroform, 43 to 53 parts by weight of an atactic homopolystyrene having a having a melt flow index of 1.5 to 3.5 grams per 10 minutes measured according to ISO 1133-4 (2011) at 200 °C and 5 kilogram load, and 5 to 15 parts by weight of a polystyrene-poly(ethylene-butylene)-polystyrene triblock copolymer having a weight average molecular weight of 200,000 to 400,000 grams/mole; wherein the parts by weight are based on 100 parts by weight total of the poly(phenylene ether), the polystyrene, and the hydrogenated block copolymer. In some embodiments, the composition comprises 5 to 75 parts by weight of glass fibers.

Another embodiment is a method of controlling microbial growth during transportation or storage of water, the method comprising transporting or storing the water in contact with a surface of a layer having a composition comprising 20 to 70 parts by weight of a poly(phenylene ether), 30 to 80 parts by weight of a polystyrene, and 1 to 15 parts by weight of a hydrogenated block copolymer of an alkenyl aromatic monomer and a conjugated diene; wherein the parts by weight are based on 100 parts by weight total of the poly(phenylene ether), the polystyrene, and the hydrogenated block copolymer. All of the variations described above for the inner layer of the lined pipe apply as well to the composition in the method of controlling microbial growth during transportation or storage of water. In some embodiments, the poly(phenylene ether) has a weight average molecular weight of 25,000 to 60,000 grams/mole. In some embodiments, the surface is characterized by surface roughness parameters *Rₐ* having a value of 3 to 15 nanometers, and *R_{q}* having a value of 7 to 25 nanometers.

In the method of controlling microbial growth, the composition can, optionally, include glass fibers. Suitable glass fibers include those based on E, A, C, ECR, R, S, D, and NE glasses, as well as quartz. In some embodiments, the glass fibers have a diameter of about 2 to about 30 micrometers, specifically about 5 to about 25 micrometers, more specifically about 10 to about 15 micrometers. In some embodiments, the length of the glass fibers before compounding is about 2 to about 7 millimeters, specifically about 3 to about 5 millimeters. The glass fibers can, optionally, include a so-called adhesion promoter to improve its compatibility with the poly(phenylene ether) and the polystyrene. Adhesion promoters include chromium complexes, silanes, titanates, zirco-aluminates, propylene maleic anhydride copolymers, reactive cellulose esters and the like. Suitable glass fibers are commercially available from suppliers including, for example, Owens Corning, Nippon Electric Glass, PPG, and Johns Manville. When present, the glass fibers can be used in an amount of 5 to 100 parts by weight, or 5 to 80 parts by weight, or 5 to 75 parts by weight, or 5 to 50 parts by weight, or 10 to 40 parts by weight, or 20 to 30 parts by weight, based on 100 parts by weight total of the poly(phenylene ether), the polystyrene, and the hydrogenated block copolymer.

In a very specific embodiment of the method of controlling microbial growth during transportation or storage of water, the method comprises transporting or storing the water in contact with a surface of a layer having a composition comprising 35 to 45 parts by weight of a poly(2,6-dimethyl-1,4-phenylene ether) having an intrinsic viscosity of 0.1 to 0.6 deciliter per gram, measured at 25 °C in chloroform, 43 to 53 parts by weight of an atactic homopolystyrene having a having a melt flow index of 1.5 to 3.5 grams per 10 minutes measured according to ISO 1133-4 (2011) at 200 °C and 5 kilogram load, and 5 to 15 parts by weight of a polystyrene-poly(ethylene-butylene)-polystyrene triblock copolymer having a weight average molecular weight of 200,000 to 400,000 grams/mole; wherein the parts by weight are based on 100 parts by weight total of the poly(phenylene ether), the polystyrene, and the hydrogenated block copolymer. In some embodiments, the composition comprises 5 to 75 parts by weight of glass fibers.

Another embodiment is a composition, comprising, 30 to 50 parts by weight of a poly(2,6-dimethyl-1,4-phenylene ether) having an intrinsic viscosity of 0.1 to 0.6 deciliter per gram measured by Ubbelohde viscometer at 25 °C in chloroform; 35 to 55 parts by weight of an atactic homopolystyrene having a having a melt flow index of 1 to 5 grams per 10 minutes measured according to ISO 1133-4 (2011) at 200 °C and 5 kilogram load; and 1 to 15 parts by weight of a hydrogenated block copolymer of an alkenyl aromatic monomer and a conjugated diene; and 5 to 100 parts by weight of glass fibers; wherein parts by weight are based on 100 parts by weight total of the poly(phenylene ether), the polystyrene, and the hydrogenated block copolymer; wherein the composition excludes rubber-modified polystyrene, excludes unhydrogenated block copolymers of styrene and butadiene, and comprises less than 1 part per million by weight of free butadiene, based on the total weight of the inner layer composition; and wherein the composition exhibits a Biomass Production Potential less than or equal to 500 picograms adenosine triphosphate per centimeter² determined according to NEN-EN 16421:2014 method 1. In some embodiments, the poly(phenylene ether) has a weight average molecular weight of 20,000 to 60,000 grams/mole. In some embodiments, the composition further comprises 5 to 50 parts by weight, or 15 to 45 parts by weight, of glass fibers. In some embodiments, the hydrogenated block copolymer is a food grade hydrogenated block copolymer, as described above. In some embodiments, the composition exhibits a Biomass Production Potential less than or equal to 300 picograms adenosine triphosphate per centimeter² determined according to NEN-EN 16421:2014 method 1.

The composition includes glass fibers. Suitable glass fibers include those based on E, A, C, ECR, R, S, D, and NE glasses, as well as quartz. In some embodiments, the glass fibers have a diameter of about 2 to about 30 micrometers, specifically about 5 to about 25 micrometers, more specifically about 10 to about 15 micrometers. In some embodiments, the length of the glass fibers before compounding is about 2 to about 7 millimeters, specifically about 3 to about 5 millimeters. The glass fibers can, optionally, include a so-called adhesion promoter to improve its compatibility with the poly(phenylene ether) and the polystyrene. Adhesion promoters include chromium complexes, silanes, titanates, zirco-aluminates, propylene maleic anhydride copolymers, reactive cellulose esters and the like. Suitable glass fibers are commercially available from suppliers including, for example, Owens Corning, Nippon Electric Glass, PPG, and Johns Manville. The glass fibers can be used in an amount of 5 to 100 parts by weight, or 5 to 80 parts by weight, or 5 to 75 parts by weight, or 10 to 50 parts by weight, or 10 to 40 parts by weight, or 20 to 30 parts by weight, based on 100 parts by weight total of the poly(phenylene ether), the polystyrene, and the hydrogenated block copolymer.

In a very specific embodiment of the composition, it comprises 37 to 47 parts by weight of the poly(phenylene ether), 42 to 52 parts by weight of the polystyrene, 5 to 15 parts by weight of the hydrogenated block copolymer, and 5 to 75 parts by weight of glass fibers.

The invention is further illustrated by the following non-limiting examples.

### EXAMPLES 1-6

Components used to prepare the poly(phenylene ether) compositions are summarized in Table 1.

**Table 1**

| Component | Description |
|---|---|
| PPE | Poly(2,6-dimethyl-1,4-phenylene ether), CAS Reg. No. 24938-67-8, having an intrinsic viscosity of about 0.40 deciliter per gram as measured in chloroform at 25°C; obtained as PPO™ 640 Resin from SABIC Innovative Plastics. |
| PS | Atactic polystyrene, CAS Reg. No. 9003-53-6, having a melt flow index of 1.9 to 2.9 grams per 10 minutes measured at 200 °C and 5 kilogram load, obtained as EMPERA™ 251N Resin from Ineos Styrenics International SA. |
| SEBS | Polystyrene-poly(ethylene-butylene)-polystyrene triblock copolymer, CAS Reg. No. 66070-58-4, having a polystyrene content of about 30 to 33 weight percent and a weight average molecular weight of about 253,000 to 310,000 grams/mole; obtained as KRATON™ G1651 Resin from Kraton Polymers Nederland. |
| LDPE | Low density polyethylene, CAS Reg. No. 9002-88-4, having a density of 0.919 gram/milliliter at 25 °C, a melt flow index of 22 grams/10 minutes measured at 190 °C and 2.16 kilogram load, milled to a particle diameter of about 1000 micrometers; obtained as LDPE 1922SF from SABIC Petrochemicals BV. |
| TBPP | Tris(2,4-di-tert-butylphenyl) phosphite, CAS Reg. No. 31570-04-4; obtained as IRGAFOS™ 168 from BASF. |
| ZnO | Zinc oxide, CAS Reg. No. 1314-13-2; obtained as SACHTOLITH™ HD-S from Sachtleben. |
| ZnS | Zinc sulfide, CAS Reg. No. 1314-98-3; obtained as HARZSIEGEL™ CF from Norkem Norzinco GmbH. |
| GF | Chopped glass fiber having a thickness of about 14 micrometers and a silane surface treatment for compatibility with poly(phenylene ether); obtained as FC242A from Owens Corning, or CS 7993 from Lanxess. |

All components except for atactic polystyrene were dry-blended before compounding. Compositions were compounded on a 28 millimeter internal diameter twin-screw Werner & Pfleiderer extruder operating at a throughput of about 20 kilograms per hour and barrel temperatures of 40 °C / 210 °C / 260 °C / 280 °C / 280 °C / 270 °C / 280 °C / 280 °C / 290 °C / 290 °C / 300 °C from feed throat to die. All components were added at the feed throat. The extrudate was cooled in a water bath and pelletized, and the pellets were dried for 2 hours at 80 °C before use for injection molding.

Test articles for physical property testing were injection molded on an Engel 110T injection molding machine operating with barrel temperatures of 260 to 280 °C and a mold temperature of 80 °C.

Compositions and properties are summarized in Table 2, where component amounts are expressed in parts by weight based on 100 parts by weight total of poly(phenylene ether), polystyrene, and hydrogenated block copolymer. Charpy impact strength values, expressed in units of kilojoules/meter² (kJ/m²), were determined at -30, 0, and 23 °C according to ISO 179-1 (2010) using Method ISO 179-1/1eA, an edgewise impact geometry, notched samples, bar dimensions of 80 × 10 × 4 millimeters, a pendulum energy of 4.2 joules, and five samples per composition. Flexural modulus and flexural strength values, each expressed in units of megapascals (MPa), and flexural strain at strength and stress at 3.5% strain values, each expressed in units of percent, were determined according to ISO 178-4 (2010) at 23 °C using bar dimensions of 80 × 10 × 4 millimeters, a support span of 64 millimeters, a test speed of 2 millimeters per minute, and five samples per composition. Heat deflection temperature (HDT) values, expressed in units of °C, were determined according to ISO 75-1 and 75-2 (2004) using bar dimensions of 80 × 10 × 4 millimeters, a flatwise test direction, a loading fiber stress of 1.80 megapascals, and two samples per composition. Izod Notched Impact strength (INI) values, expressed in units of kilojoules/meter², were determined at -30, 0, and 23 °C according to ISO 180-1 (2006) using bar dimensions of 80 × 10 × 4 millimeters, notched samples, a pendulum energy of 5.5 joules, and five samples per composition. Multiaxial impact (MAI) puncture energy and energy at maximum force values, each expressed in units of joules, and deflection at break values, expressed in units of millimeters, were determined at 23 °C according to ISO 6603-2 (2000) using a test speed of 4.4 meters per second and five samples per composition. Values of tensile modulus, tensile stress at yield, and tensile stress at break, each expressed in units of megapascals, and values of tensile strain at yield and tensile strain at break, each expressed in units of percent, were determined at 23 °C according to ISO 527-1 and 527-2 (2012) using a test speed of 50 millimeters/minute and five samples per composition. Vicat softening temperature values, expressed in units of degrees centigrade, were determined according to ISO 306-4 (2004) using a 50 newton load and a test rate of 120 °C per hour and two samples per composition. Melt volume flow rate values, expressed in units of cubic-centimeters per 10 minutes, were determined according to ISO 1133-4 (2011) using pre-testing drying for 2 hours at 80 °C, a temperature of 280 °C, a 5 kilogram load, and a test time of 900 seconds.

**Table 2**

| | Ex. 1 | Ex. 2 | Ex. 3 | Ex. 4 | Ex. 5 | Ex. 6 |
|---|---|---|---|---|---|---|
| COMPOSITIONS | | | | | | |
| PS | 58.76 | 55.70 | 52.65 | 50.36 | 47.56 | 43.48 |
| PPE | 41.24 | 41.24 | 41.24 | 41.24 | 41.24 | 41.24 |
| SEBS | 0.00 | 3.05 | 6.11 | 8.40 | 11.20 | 15.27 |
| TBPP | 0.10 | 0.10 | 0.10 | 0.10 | 0.10 | 0.10 |
| ZnO | 0.10 | 0.10 | 0.10 | 0.10 | 0.10 | 0.10 |
| ZnS | 0.10 | 0.10 | 0.10 | 0.10 | 0.10 | 0.10 |
| LDPE | 1.53 | 1.53 | 1.53 | 1.53 | 1.53 | 1.53 |

| PROPERTIES | | | | | | |
|---|---|---|---|---|---|---|
| Charpy impact, 23°C (J) | 1.93 | 2.08 | 3.25 | 6.29 | 14.55 | 30.72 |
| Charpy impact, 0°C (J) | 1.98 | 2.23 | 3.25 | 5.22 | 8.95 | 22.02 |
| Charpy impact, -30°C (J) | 1.84 | 2.23 | 2.82 | 3.25 | 4.19 | 6.69 |
| Flex. modulus (MPa) | 2936 | 2838 | 2697 | 2520 | 2373 | 2171 |
| Flex. strength (MPa) | 115.93 | 108.85 | 101.71 | 93.46 | 86.95 | 78.79 |
| Flex. strain at strength (%) | 5.82 | 5.92 | 5.96 | 5.81 | 5.8 | 5.74 |
| Flex. stress at 3.5% strain (MPa) | 94.41 | 88.68 | 83.39 | 78.07 | 73.38 | 67.02 |
| HDT (°C) | 117.8 | 118.3 | 118.15 | 118.25 | 118.7 | 119.15 |
| INI, 23°C (kJ/m²) | 1.9 | 1.98 | 4.23 | 5.76 | 16.81 | 28.17 |
| INI, 0°C (kJ/m²) | 1.87 | 1.94 | 4.30 | 4.42 | 7.83 | 21.24 |
| INI, -30°C (kJ/m²) | 1.98 | 1.90 | 2.13 | 3.67 | 4.03 | 5.84 |
| MAI puncture energy, 23°C (J) | 1.76 | 3.42 | 6.80 | 19.38 | 73.74 | 90.18 |
| MAI energy at max. force, 23°C (J) | 1.68 | 3.00 | 6.30 | 15.16 | 49.86 | 61.4 |
| MAI deflection at break, 23°C (mm) | 2.88 | 5.28 | 4.66 | 7.64 | 15.64 | 17.84 |
| MAI puncture energy, 0°C (J) | 1.46 | 1.46 | 9.84 | 12.76 | 31.62 | 73.68 |
| MAI energy at max. force, 0°C (J) | 1.38 | 1.30 | 8.58 | 11.98 | 28.92 | 55.48 |
| MAI deflection at break, 0°C (mm) | 2.54 | 2.60 | 5.82 | 5.74 | 9.26 | 15.74 |
| MAI puncture energy, -30°C (J) | 1.16 | 1.48 | 4.62 | 10.22 | 16.74 | 35.18 |
| MAI energy at max. force, -30°C (J) | 1.12 | 1.38 | 4.40 | 9.92 | 15.42 | 33.66 |
| MAI deflection at break, -30°C (mm) | 2.26 | 2.78 | 4.30 | 5.22 | 6.86 | 9.64 |
| Tens. modulus (MPa) | 2968 | 2826.8 | 2724.4 | 2560.4 | 2409.8 | 2226.2 |
| Tens. stress at yield (MPa) | 80.28 | 78.69 | 74.76 | 67.73 | 62.11 | 56.24 |
| Tens. stress at break (MPa) | 79.28 | 76.98 | 66.46 | 49.76 | 45.67 | 44.47 |
| Tens. strain at yield (%) | 3.70 | 4.38 | 4.20 | 3.89 | 3.76 | 3.67 |
| Tens. strain at break (%) | 3.6 | 4.3 | 4.2 | 3.8 | 3.9 | - |
| Vicat temp. (°C) | 135.8 | 136.5 | 137.6 | 137.3 | 137.6 | 137.0 |
| MVR (cm³/10 min) | 24.91 | 23.48 | 20.54 | 17.08 | 14.56 | 11.90 |

### EXAMPLES 7-11

These examples illustrate prophetic poly(phenylene ether) compositions comprising glass fibers. Compounding conditions are the same as for Example 1-6, except that glass fibers are added to the extruder via a downstream side feeder. In Table 3, component amounts are expressed in parts by weight based on 100 parts by weight total of poly(phenylene ether), polystyrene, and hydrogenated block copolymer.

**Table 3**

| | Ex. 7 | Ex. 8 | Ex. 9 | Ex. 10 | Ex. 11 |
|---|---|---|---|---|---|
| COMPOSITIONS | | | | | |
| PS | 47.75 | 47.75 | 47.75 | 47.75 | 47.75 |
| PPE | 41.00 | 41.00 | 41.00 | 41.00 | 41.00 |
| SEBS | 11.25 | 11.25 | 11.25 | 11.25 | 11.25 |
| GF | 5.39 | 11.39 | 25.71 | 44.25 | 69.20 |
| TBPP | 0.11 | 0.11 | 0.13 | 0.15 | 0.17 |
| ZnO | 0.11 | 0.11 | 0.13 | 0.15 | 0.17 |
| LDPE | 1.62 | 1.71 | 1.93 | 2.21 | 2.60 |
| ZnS | 0.54 | 0.57 | 0.64 | 0.74 | 0.87 |

### SURFACE ROUGHNESS MEASUREMENTS

These examples illustrate surface roughness characterization for as-extruded surfaces of high density polyethylene (HDPE), unplasticized poly(vinyl chloride) (PVC-u), and a poly(phenylene ether) composition (PPE).

The high density polyethylene was obtained as VESTOLEN A RELY 5924R Resin from SABIC. The poly(phenylene ether) composition was Example 5 from Table 2, above. The HDPE and PVC-u were extruded as a single layer having a thickness of about 32 millimeters. The poly(phenylene ether) composition was extruded as single layer having a thickness of 150 micrometers. The extrusion temperatures were 240 °C for high density polyethylene, 165 °C for poly(vinyl chloride), and 250 °C for the poly(phenylene ether) composition. A 4 by 4 micrometer area of each as-extruded surface was analyzed by atomic force microscopy. The resulting data were used to calculate *R_{q}* and *Rₐ* values according to the method of T. V. Vorburger and J. Raja, "Surface Finish Metrology Tutorial", NISTIR 89-4088, June 1990, page 36, Figure 3-22.

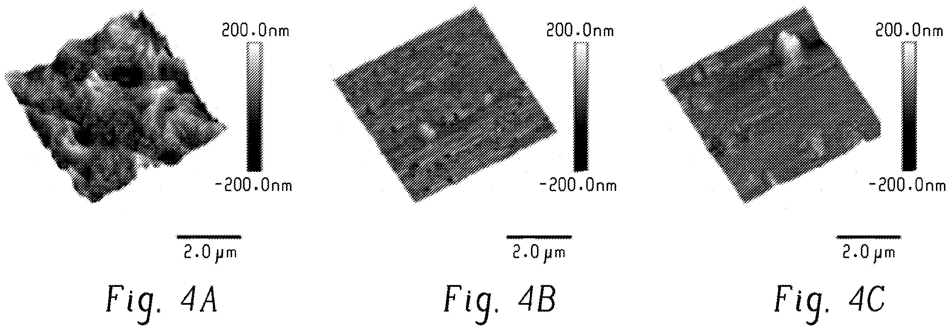

Figures 4A - 4C show atomic force micrographs for as-extruded surfaces of high density polyethylene (4A), the poly(phenylene ether) composition (4B), and unplasticized poly(vinyl chloride) (4C). *R_{q}* and *Rₐ* values are presented in Table 4. The results show that the poly(phenylene ether) composition has the smoothest surface, with the unplasticized poly(vinyl chloride) surface being slightly rougher and the high density polyethylene surface being substantially rougher.

**Table 4**

| Material | *R_{q}* (nm) | *Rₐ* (nm) |
|---|---|---|
| HDPE | 69 | 54 |
| PVC-u | 22 | 11 |
| PPE | 14 | 7 |

### COEXTRUSION OF LINED PIPE

Coextrusion is the extrusion of multiple layers of material simultaneously. Coextrusion utilizes two or more extruders to melt and deliver a steady volumetric throughput of different viscous plastics to a single extrusion head (die) from which the materials are extruded in the desired form. The layer thicknesses are controlled by the relative speeds and sizes of the individual extruders delivering the materials.

An outer layer consisting of polypropylene and having an annular cross-section is extruded at a melt temperature of about 235 °C. The polypropylene has a melt flow of 0.3 grams/10 minutes measured at 230 °C and 2.16 kilogram load according to ASTM D 1238-13. It can be obtained as VESTOLEN P 9421 Resin from SABIC. An inner layer consisting of the Example 5 composition above and having an annular cross-section is coextruded at a melt temperature of about 245 °C.

### EXAMPLE 12, COMPARATIVE EXAMPLES 1 AND 2

These examples illustrate that articles prepared from the present poly(phenylene ether) composition exhibit much better control of microbial growth in water, compared to corresponding articles prepared from poly(vinyl chloride). Testing was conducted according to NEN-EN 16421:2014, "Influence of materials on water for human consumption - Enhancement of microbial growth (EMG)", method 1. In this test, borosilicate glass serves as a negative control (low microbial growth manifested as BPP < 100 picograms ATP/cm²), plasticized poly(vinyl chloride) (PVC-p) as the positive control (high microbial growth manifested as BPP > 10,000 picograms ATP/cm²), and the poly(phenylene ether) composition as the experimental sample.

Components used to form the poly(phenylene ether) composition are summarized in Table 5.

**Table 5**

| Component | Description |
|---|---|
| PPE | Poly(2,6-dimethyl-1,4-phenylene ether), CAS Reg. No. 24938-67-8, having an intrinsic viscosity of about 0.40 deciliter per gram as measured in chloroform at 25°C; obtained as PPO™ 640 Resin from SABIC Innovative Plastics. |
| PS | Atactic polystyrene, CAS Reg. No. 9003-53-6, having a melt flow index of 2 to 4 grams per 10 minutes measured at 200 °C and 5 kilogram load, obtained as STYROLUTION™ 158N Resin from Ineos Styrenics International SA, or as POLYSTYRENE CRYSTAL 1160 from Total Petrochemicals USA Inc. |
| SEBS | Polystyrene-poly(ethylene-butylene)-polystyrene triblock copolymer, CAS Reg. No. 66070-58-4, having a polystyrene content of about 30 to 33 weight percent and a weight average molecular weight of about 253,000 to 310,000 grams/mole; obtained as KRATON™ G1651 E Resin from Kraton Performance Polymers, or as CALPRENE™ H6170 from Dvnasol, Puteaux, France. |
| LDPE | Low density polyethylene, CAS Reg. No. 9002-88-4, having a density of 0.919 gram/milliliter at 25 °C, a melt flow index of 22 grams/10 minutes measured at 190 °C and 2.16 kilogram load, milled to a particle diameter of about 1000 |
| | micrometers; obtained as LDPE 1922SF from SABIC Petrochemicals BV. |
| TBPP | Tris(2,4-di-tert-butylphenyl) phosphite, CAS Reg. No. 31570-04-4; obtained as IRGAFOS™ 168 from BASF, as ALKANOX™ 240 from Chemtura, or as EVERFOS™-168 from Everspring Chemical Co. Ltd. |
| ZnO | Zinc oxide, CAS Reg. No. 1314-13-2; obtained as HARZSIEGEL™ CF from Norkem Norzinco GmbH. |
| ZnS | Zinc sulfide, CAS Reg. No. 1314-98-3; obtained as SACHTOLITH™ HD-S from Sachtleben. |

Compositions were compounded as described for Examples 1-6. The poly(phenylene ether) composition is summarized in Table 6, where component amounts are expressed in parts by weight per 100 parts by weight total of poly(phenylene ether) (PPE), polystyrene (PS), and hydrogenated block copolymer (SEBS).

**Table 6**

| Component | Ex. 12 |
|---|---|
| PS | 47.75 |
| PPE | 41.00 |
| SEBS | 11.25 |
| TBPP | 0.10 |
| ZnO | 0.10 |
| LDPE | 1.53 |
| ZnS | 0.51 |

One test piece of each of the three materials was placed in each of two test containers (that is, the test was run in duplicate). Each test piece had a total external surface area of about 150 centimeter². Each test containers was filled with appropriately amended drinking water (from Tull en't Waal, The Netherlands) and inoculated with a mixture of naturally occurring microorganisms derived from a surface source of water.

The test pieces were incubated at 30°C for a period of 16 weeks at a constant surface area to volume ratio of 0.16 centimeter⁻¹. This ratio was kept constant by adjusting the volume of the water in the test containers when a test piece was removed for biomass measurement. The test water was replaced once every seven days.

Formation of biomass on the test piece and in the water was determined with adenosine triphosphate (ATP) measurements after 8, 12, and 16 weeks of incubation. The ATP concentration of the total water volume was used in the calculation of Suspended Biomass (ATP picograms/milliliter). Values for duplicate samples were used to calculate an average and standard deviation.

The biomass adhered to the surface of the material was loosened with the aid of high-energy sonication in a small amount of water. The ATP concentration of this water was used in the calculation of Attached Biomass (picograms ATP/centimeter²). Values for duplicate samples were used to calculate an average and standard deviation.

Each test was validated by the satisfactory performance of the negative control (glass) and positive control (PVC-p) under equivalent conditions. The average ATP concentrations of the test pieces and test waters were used to calculate the Biomass Production value (BP) for each material (picograms ATP/centimeter²).

The Biomass Production Potential (BPP) was calculated as the average value of the BP values observed at 8, 12 and 16 weeks, minus the BP value for the negative control observed on the same days, and is expressed as picograms ATP/cm².

Test results are presented in Tables 7 and 8. The results show that biomass production in the presence of the poly(phenylene ether) composition was much lower than that in the presence of PVC and comparable to that in the presence of glass.

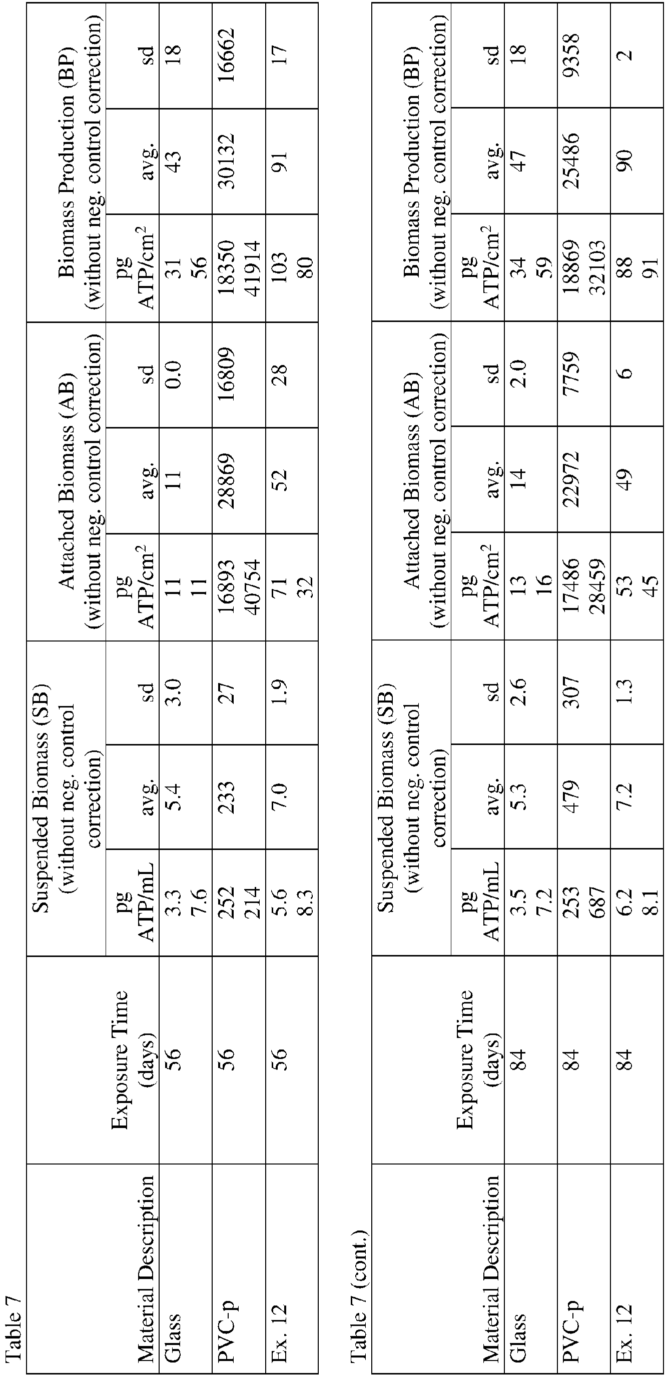

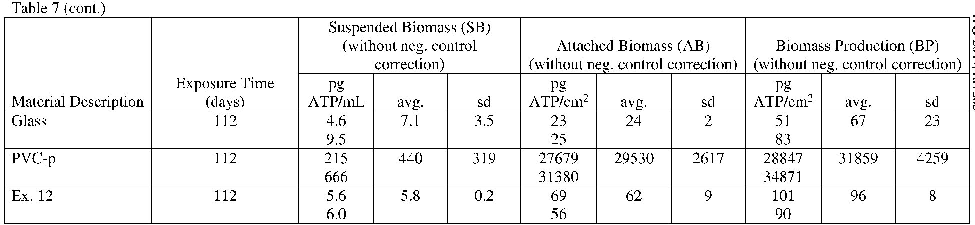

**Table 8**

| Material Description | Exposure | Suspended Biomass (SB) | | Attached Biomass (AB) | | Biomass Production Potential (BPP) | |
|---|---|---|---|---|---|---|---|
| | Time (days) | pg ATP/mL | sd | pg ATP/cm² | sd | pg ATP/cm² | sd |
| Glass (neg. control) | 56 | 5.4 | 3.0 | 11 | 0.0 | | |
| | 84 | 5.3 | 2.6 | 14 | 2.0 | | |
| | 112 | 7.1 | 3.5 | 24 | 2.0 | | |
| | average | 5.9 | 3.1 | 16 | 2.0 | 52 | 2 |
| PVC-p (pos. control) | 56 | 233 | 27 | 28869 | 16809 | | |
| | 84 | 470 | 307 | 22972 | 7759 | | |
| | 112 | 440 | 319 | 29530 | 2617 | | |
| | average | 381 | 256 | 27124 | 10795 | 29159 | 11304 |
| Ex. 12 | 56 | 1.5 | 3.6 | 41 | 28 | | |
| | 84 | 1.8 | 2.9 | 34 | 6 | | |
| | 112 | -1.3 | 3.5 | 38 | 9 | | |
| | average | 0.7 | 3.3 | 38 | 17 | 40 | 22 |

## Claims

1. A lined pipe for transporting water, comprising:
an outer layer comprising an outer layer composition comprising, based on the total weight of the outer layer composition,
50 to 100 weight percent of a thermoplastic selected from the group consisting of crosslinked polyethylene, polypropylene, poly(1-butene), and poly(vinyl chloride), and
0 to 50 weight percent filler; and
an inner layer comprising an inner layer composition comprising
20 to 70 parts by weight of a poly(phenylene ether),
30 to 80 parts by weight of a polystyrene, and
0 to 15 parts by weight of a hydrogenated block copolymer of an alkenyl aromatic monomer and a conjugated diene;
wherein the parts by weight are based on 100 parts by weight total of the poly(phenylene ether), the polystyrene, and the hydrogenated block copolymer.

2. The lined pipe of claim 1, wherein the filler is selected from the group consisting of talc, clay, mica, calcium carbonate, and combinations thereof.

3. The lined pipe of any one of claims 1-2, wherein the poly(phenylene ether) is a poly(2,6-dimethyl-1,4-phenylene ether) having an intrinsic viscosity of 0.1 to 0.6 deciliter per gram measured by Ubbelohde viscometer at 25 °C in chloroform.

4. The lined pipe of any one of claims 1-3, wherein the polystyrene comprises an atactic homopolystyrene having a having a melt flow index of 1 to 5 grams per 10 minutes measured according to ISO 1133-4 (2011) at 200 °C and 5 kilogram load.

5. The lined pipe of any one of claims 1-4, wherein the inner layer composition comprises 1 to 15 parts by weight of the hydrogenated block copolymer; and wherein the hydrogenated block copolymer is a polystyrene-poly(ethylene-butylene)-polystyrene triblock copolymer having a polystyrene content of about 25 to 40 weight percent and a weight average molecular weight of about 200,000 to 400,000 grams/mole.

6. The lined pipe of any one of claims 1-5, wherein the inner layer comprises an inner surface **characterized by** surface roughness parameters *Rₐ* having a value of 3 to 15 nanometers, and *R_{q}* having a value of 7 to 25 nanometers.

7. The lined pipe of claim 1,
wherein the outer layer composition comprises 95 to 100 weight percent polypropylene;
wherein the poly(phenylene ether) comprises a poly(2,6-dimethyl-1,4-phenylene ether) having an intrinsic viscosity of 0.1 to 0.6 deciliter per gram, measured at 25 °C in chloroform;
wherein the polystyrene comprises an atactic homopolystyrene having a having a melt flow index of 1.5 to 3.5 grams per 10 minutes measured according to ISO 1133-4 (2011) at 200 °C and 5 kilogram load;
wherein the inner layer composition comprises 1 to 15 parts by weight of the hydrogenated block copolymer; and wherein the hydrogenated block copolymer is a polystyrene-poly(ethylene-butylene)-polystyrene triblock copolymer having a polystyrene content of about 25 to 40 weight percent and a weight average molecular weight of about 200,000 to 400,000 grams/mole; and
wherein the inner layer composition comprises
35 to 45 parts by weight of the poly(phenylene ether),
43 to 53 parts by weight of the polystyrene, and
5 to 15 parts by weight of the hydrogenated block copolymer.

8. An injection molded article for water contact, the article comprising a composition comprising:
30 to 50 parts by weight of a poly(2,6-dimethyl-1 ,4-phenylene ether) having an intrinsic viscosity of 0.1 to 0.6 deciliter per gram measured by Ubbelohde viscometer at 25 °C in chloroform;
35 to 55 parts by weight of an atactic homopolystyrene having a having a melt flow index of 1 to 5 grams per 10 minutes measured according to ISO 1133-4 (2011) at 200 °C and 5 kilogram load;
1 to 15 parts by weight of a hydrogenated polystyrene-poly(ethylene-butylene)-polystyrene triblock copolymer; and
5 to 100 parts by weight of glass fibers;
wherein parts by weight are based on 100 parts by weight total of the poly(phenylene ether), the polystyrene, and the hydrogenated block copolymer;
wherein the composition excludes rubber-modified polystyrene, excludes unhydrogenated block copolymers of styrene and butadiene, and comprises less than 1 part per million by weight of free butadiene, based on the total weight of the inner layer composition; and
wherein the composition exhibits a Biomass Production Potential less than or equal to 500 picograms adenosine triphosphate per centimeter² determined according to NEN-EN 16421:2014 method 1.

9. The injection molded article of claim 8, wherein the poly(2,6-dimethyl-1,4-phenylene ether) has a weight average molecular weight of 25,000 to 60,000 grams/mole.

10. A method of controlling microbial growth during transportation or storage of water, the method comprising transporting or storing the water in contact with a surface having a composition comprising
20 to 70 parts by weight of a poly(phenylene ether),
30 to 80 parts by weight of a polystyrene, and
1 to 15 parts by weight of a hydrogenated block copolymer of an alkenyl aromatic monomer and a conjugated diene;
wherein the parts by weight are based on 100 parts by weight total of the poly(phenylene ether), the polystyrene, and the hydrogenated block copolymer.

11. The method of claim 10, wherein the composition further comprises 5 to 100 parts by weight of glass fibers.

12. The method of claim 10 or 11, wherein the poly(phenylene ether) has a weight average molecular weight of 20,000 to 60,000 grams/mole.

13. A composition, comprising,
30 to 50 parts by weight of a poly(2,6-dimethyl-1 ,4-phenylene ether) having an intrinsic viscosity of 0.1 to 0.6 deciliter per gram measured by Ubbelohde viscometer at 25 °C in chloroform;
35 to 55 parts by weight of an atactic homopolystyrene having a having a melt flow index of 1 to 5 grams per 10 minutes measured according to ISO 1133-4 (2011) at 200 °C and 5 kilogram load;
1 to 15 parts by weight of a hydrogenated block copolymer of an alkenyl aromatic monomer and a conjugated diene; and
5 to 100 parts by weight of glass fibers;
wherein parts by weight are based on 100 parts by weight total of the poly(phenylene ether), the polystyrene, and the hydrogenated block copolymer;
wherein the composition excludes rubber-modified polystyrene, excludes unhydrogenated block copolymers of styrene and butadiene, and comprises less than 1 part per million by weight of free butadiene, based on the total weight of the inner layer composition; and
wherein the composition exhibits a Biomass Production Potential less than or equal to 500 picograms adenosine triphosphate per centimeter² determined according to NEN-EN 16421:2014 method 1.

14. The composition of claim 13, wherein the poly(phenylene ether) has a weight average molecular weight of 20,000 to 60,000 grams/mole.

15. The composition of any of claims 13-14, comprising
37 to 47 parts by weight of the poly(phenylene ether),
42 to 52 parts by weight of the polystyrene,
5 to 15 parts by weight of the hydrogenated block copolymer, and
5 to 75 parts by weight of glass fibers.

## Patentansprüche

1. Ausgekleidetes Rohr zum Transport von Wasser, umfassend:
eine Außenschicht, umfassend eine Außenschichtzusammensetzung, umfassend, bezogen auf das Gesamtgewicht der Außenschichtzusammensetzung,
50 bis 100 Gewichtsprozent eines Thermoplasten, ausgewählt aus der Gruppe bestehend aus vernetztem Polyethylen, Polypropylen, Poly(1-buten) und Poly(vinylchlorid) und
0 bis 50 Gewichtsprozent Füllstoff; und
eine Innenschicht, umfassend eine Innenschichtzusammensetzung, umfassend
20 bis 70 Gewichtsteile eines Poly(phenylenethers),
30 bis 80 Gewichtsteile eines Polystyrols und
0 bis 15 Gewichtsteile eines hydrierten Block-Copolymers eines alkenylaromatischen Monomers und eines konjugierten Diens;
wobei die Gewichtsteile auf insgesamt 100 Gewichtsteile des Poly(phenylenethers), des Polystyrols und des hydrierten Block-Copolymers bezogen sind.

2. Ausgekleidetes Rohr nach Anspruch 1, wobei der Füllstoff aus der Gruppe bestehend aus Talk, Ton, Glimmer (Mica), Calciumcarbonat und Kombinationen davon ausgewählt ist.

3. Ausgekleidetes Rohr nach irgendeinem der Ansprüche 1 bis 2, wobei der Poly(phenylenether) ein Poly(2,6-dimethyl-1,4-phenylenether) mit einer intrinsischen Viskosität bzw. Grenzviskosität von 0,1 bis 0,6 Deziliter pro Gramm ist, gemessen mit einem Ubbelohde-Viskosimeter bei 25 ° C in Chloroform.

4. Ausgekleidetes Rohr nach irgendeinem der Ansprüche 1 bis 3, wobei das Polystyrol ein ataktisches Homopolystyrol mit einem Schmelzflussindex von 1 bis 5 g pro 10 Minuten umfasst, gemessen gemäß ISO 1133-4 (2011) bei 200 °C und 5 Kilogramm Last.

5. Ausgekleidetes Rohr nach irgendeinem der Ansprüche 1 bis 4, wobei die Innenschichtzusammensetzung 1 bis 15 Gewichtsteile des hydrierten Block-Copolymers umfasst; und wobei das hydrierte Block-Copolymer ein Polystyrol-Poly(ethylen-butylen)-Polystyrol-Triblock-Copolymer mit einem Polystyrolgehalt von etwa 25 bis 40 Gewichtsprozent und einem Gewichtsmittel des Molekulargewichts von etwa 200.000 bis 400.000 Gramm/Mol ist.

6. Ausgekleidetes Rohr nach irgendeinem der Ansprüche 1 bis 5, wobei die Innenschicht eine Innenoberfläche umfasst, die durch Oberflächenrauheitsparameter *Rₐ* mit einem Wert von 3 bis 15 Nanometern und *R_{q}* mit einem Wert von 7 bis 25 Nanometern gekennzeichnet ist.

7. Ausgekleidetes Rohr nach Anspruch 1,
wobei die Außenschichtzusammensetzung 95 bis 100 Gewichtsprozent Polypropylen umfasst;
wobei der Poly(phenylenether) einen Poly(2,6-dimethyl-1,4-phenylenether) mit einer intrinsischen Viskosität bzw. Grenzviskosität von 0,1 bis 0,6 Deziliter pro Gramm umfasst, gemessen bei 25°C in Chloroform;
wobei das Polystyrol ein ataktisches Homopolystyrol mit einem Schmelzflussindex von 1,5 bis 3,5 Gramm pro 10 Minuten umfasst, gemessen gemäß ISO 1133-4 (2011) bei 200 °C und 5 Kilogramm Last;
wobei die Innenschichtzusammensetzung 1 bis 15 Gewichtsteile des hydrierten Block-Copolymers umfasst; und wobei das hydrierte Block-Copolymer ein Polystyrol-Poly(ethylen-butylen)-Polystyrol-Triblock-Copolymer mit einem Polystyrolgehalt von etwa 25 bis 40 Gewichtsprozent und einem Gewichtsmittel des Molekulargewichts von etwa 200.000 bis 400.000 Gramm/Mol ist; und
wobei die Innenschichtzusammensetzung 35 bis 45 Gewichtsteile des Poly(phenylenethers), 43 bis 53 Gewichtsteile des Polystyrols und 5 bis 15 Gewichtsteile des hydrierten Block-Copolymers umfasst.

8. Spritzgussgegenstand für Wasserkontakt, wobei der Gegenstand eine Zusammensetzung umfasst, umfassend:
30 bis 50 Gewichtsteile eines Poly(2,6-dimethyl-1,4-phenylenethers) mit einer intrinsischen Viskosität bzw. Grenzviskosität von 0,1 bis 0,6 Deziliter pro Gramm, gemessen mit einem Ubbelohde-Viskosimeter bei 25 °C in Chloroform;
35 bis 55 Gewichtsteile eines ataktischen Homopolystyrols mit einem Schmelzflussindex von 1 bis 5 Gramm pro 10 Minuten, gemessen gemäß ISO 1133-4 (2011) bei 200 °C und 5 Kilogramm Last;
1 bis 15 Gewichtsteile eines hydrierten Polystyrol-Poly(ethylen-butylen)-Polystyrol-Triblock-Copolymers; und
5 bis 100 Gewichtsteile Glasfasern;
wobei Gewichtsteile auf insgesamt 100 Gewichtsteile des Poly(phenylenethers), des Polystyrols und des hydrierten Block-Copolymers bezogen sind;
wobei die Zusammensetzung kautschukmodifiziertes Polystyrol ausschließt, nicht hydrierte Block-Copolymere von Styrol und Butadien ausschließt und weniger als 1 Gewichtsteil pro Million an freiem Butadien, bezogen auf das Gesamtgewicht der Innenschichtzusammensetzung, umfasst; und
wobei die Zusammensetzung ein Biomasseproduktionspotential *(Biomass Production Potential)* von weniger als oder gleich 500 Pikogramm Adenosintriphosphat pro Zentimeter² aufweist, bestimmt gemäß NEN-EN 16421:2014 Methode 1.

9. Spritzgussgegenstand nach Anspruch 8, wobei der Poly(2,6-dimethyl-1,4-phenylenether) ein Gewichtsmittel des Molekulargewichts von 25.000 bis 60.000 Gramm/Mol aufweist.

10. Verfahren zum Steuern des mikrobiellen Wachstums während des Transports oder der Lagerung von Wasser, wobei das Verfahren das Transportieren oder Lagern des Wassers in Kontakt mit einer Oberfläche mit einer Zusammensetzung umfasst, die 20 bis 70 Gewichtsteile eines Poly(phenylenethers), 30 bis 80 Gewichtsteile eines Polystyrols und 1 bis 15 Gewichtsteile eines hydrierten Block-Copolymers eines alkenylaromatischen Monomers und eines konjugierten Diens umfasst; wobei die Gewichtsteile auf insgesamt 100 Gewichtsteile des Poly(phenylenethers), des Polystyrols und des hydrierten Block-Copolymers bezogen sind.

11. Verfahren nach Anspruch 10, wobei die Zusammensetzung ferner 5 bis 100 Gewichtsteile Glasfasern umfasst.

12. Verfahren nach Anspruch 10 oder 11, wobei der Poly(phenylenether) ein Gewichtsmittel des Molekulargewichts von 20.000 bis 60.000 Gramm/Mol aufweist.

13. Zusammensetzung, umfassend
30 bis 50 Gewichtsteile eines Poly(2,6-dimethyl-1,4-phenylenethers) mit einer intrinsischen Viskosität bzw. Grenzviskosität von 0,1 bis 0,6 Deziliter pro Gramm, gemessen mit einem Ubbelohde-Viskosimeter bei 25°C in Chloroform;
35 bis 55 Gewichtsteile eines ataktischen Homopolystyrols mit einem Schmelzflussindex von 1 bis 5 Gramm pro 10 Minuten, gemessen gemäß ISO 1133-4 (2011) bei 200 °C und 5 Kilogramm Last;
1 bis 15 Gewichtsteile eines hydrierten Block-Copolymers eines alkenylaromatischen Monomers und eines konjugierten Diens; und
5 bis 100 Gewichtsteile Glasfasern;
wobei Gewichtsteile auf insgesamt 100 Gewichtsteile des Poly(phenylenethers), des Polystyrols und des hydrierten Block-Copolymers bezogen sind;
wobei die Zusammensetzung kautschukmodifiziertes Polystyrol ausschließt, nicht hydrierte Block-Copolymere von Styrol und Butadien ausschließt und weniger als 1 Gewichtsteil pro Million an freiem Butadien, bezogen auf das Gesamtgewicht der Innenschichtzusammensetzung, umfasst; und
wobei die Zusammensetzung ein Biomasseproduktionspotential von weniger als oder gleich 500 Pikogramm Adenosintriphosphat pro Zentimeter² aufweist, bestimmt gemäß NEN-EN 16421:2014 Methode 1.

14. Zusammensetzung nach Anspruch 13, wobei der Poly(phenylenether) ein Gewichtsmittel des Molekulargewichts von 20.000 bis 60.000 Gramm/Mol aufweist.

15. Zusammensetzung nach irgendeinem der Ansprüche 13 bis 14, umfassend 37 bis 47 Gewichtsteile des Poly(phenylenethers), 42 bis 52 Gewichtsteile des Polystyrols, 5 bis 15 Gewichtsteile des hydrierten Block-Copolymers und 5 bis 75 Gewichtsteile Glasfasern.

## Revendications

1. Tuyau de transport d'eau revêtu intérieurement, comprenant :
une couche extérieure comprenant une composition de couche extérieure comprenant, par rapport au poids total de la composition de couche extérieure,
50 à 100 pourcents en poids d'un thermoplastique choisi dans le groupe consistant en le polyéthylène réticulé, le polypropylène, le poly(1-butène) et le poly(chlorure de vinyle), et
0 à 50 pourcents en poids de charge ; et
une couche intérieure comprenant une composition de couche intérieure comprenant
20 à 70 parties en poids d'un poly(phénylène éther),
30 à 90 parties en poids d'un polystyrène, et
0 à 15 parties en poids d'un copolymère à blocs hydrogénés d'un monomère alcénylaromatique et d'un diène conjugué ;
dans lequel les parties en poids sont rapportées à 100 parties en poids du total du poly(phénylène éther), du polystyrène et du copolymère à blocs hydrogénés.

2. Tuyau revêtu intérieurement selon la revendication 1, dans lequel la charge est choisie dans le groupe consistant en le talc, l'argile, le mica, le carbonate de calcium et les combinaisons de ceux-ci.

3. Tuyau revêtu intérieurement selon l'une des revendications 1 à 2, dans lequel le poly(phénylène éther) est un poly(2,6-diméthyl-1,4-phénylène éther) ayant une viscosité intrinsèque de 0,1 à 0,6 décilitre par gramme, mesurée par un viscosimètre Ubbelohde à 25 °C dans le chloroforme.

4. Tuyau revêtu intérieurement selon l'une des revendications 1 à 3, dans lequel le polystyrène comprend un homopolystyrène atactique ayant un indice de fluidité de 1 à 5 grammes par 10 minutes, mesuré selon ISO 1133-4(2011) à 200 °C et pour une charge de 5 kilogrammes.

5. Tuyau revêtu intérieurement selon l'une des revendications 1 à 4, dans lequel la composition de couche intérieure comprend 1 à 15 parties en poids du copolymère à blocs hydrogénés ; et dans lequel le copolymère à blocs hydrogénés est un copolymère tribloc polystyrène-poly(éthylène-butylène)-polystyrène ayant une teneur en polystyrène d'environ 25 à 40 pourcents en poids et une masse moléculaire moyenne en masse d'environ 200 000 à 400 000 grammes/mole.

6. Tuyau revêtu intérieurement selon l'une des revendications 1 à 5, dans lequel la couche intérieure comprend une surface intérieure **caractérisée par** les paramètres de rugosité de surface *Rₐ* ayant une valeur de 3 à 15 nanomètres, et *R_{q}* ayant une valeur de 7 à 25 nanomètres.

7. Tuyau revêtu intérieurement selon la revendication 1,
dans lequel la composition de couche extérieure comprend 95 à 100 pourcents en poids de polypropylène ;
dans lequel le poly(phénylène éther) est un poly(2,6-diméthyl-1,4-phénylène éther) ayant une viscosité intrinsèque de 0,1 à 0,6 décilitre par gramme, mesurée par un viscosimètre Ubbelohde à 25 °C dans le chloroforme ;
dans lequel le polystyrène comprend un homopolystyrène atactique ayant un indice de fluidité de 1 à 5 grammes par 10 minutes, mesuré selon ISO 1133-4(2011) à 200 °C et pour une charge de 5 kilogrammes ;
dans lequel la composition de couche intérieure comprend 1 à 15 parties en poids du copolymère à blocs hydrogénés ; et dans lequel le copolymère à blocs hydrogénés est un copolymère tribloc polystyrène-poly(éthylène-butylène)-polystyrène ayant une teneur en polystyrène d'environ 25 à 40 pourcents en poids et une masse moléculaire moyenne en masse d'environ 200 000 à 400 000 grammes/mole ; et
dans lequel la composition de couche intérieure comprend
35 à 45 parties en poids du poly(phénylène éther),
43 à 53 parties en poids du polystyrène, et
5 à 15 parties en poids du copolymère à blocs hydrogénés.

8. Article pour contact avec l'eau moulé par injection, l'article comprenant une composition comprenant :
30 à 50 parties en poids d'un poly(2,6-diméthyl-1,4-phénylène éther) ayant une viscosité intrinsèque de 0,1 à 0,6 décilitre par gramme, mesurée par un viscosimètre Ubbelohde à 25 °C dans le chloroforme ;
35 à 55 parties en poids d'un homopolystyrène atactique ayant un indice de fluidité de 1 à 5 grammes par 10 minutes, mesuré selon ISO 1133-4(2011) à 200 °C et pour une charge de 5 kilogrammes ;
1 à 15 parties en poids d'un copolymère tribloc polystyrène-poly(éthylène-butylène)-polystyrène hydrogénés ; et
5 à 100 parties en poids de fibres de verre ;
dans lequel les parties en poids sont rapportées à 100 parties en poids du total du poly(phénylène éther), du polystyrène et du copolymère à blocs hydrogénés ;
dans lequel la composition est à l'exclusion d'un polystyrène modifié par un caoutchouc, à l'exclusion de copolymères à blocs non-hydrogénés de styrène et de butadiène, et comprend moins de 1 partie par million en poids de butadiène libre, par rapport au poids total de la composition de couche intérieure ; et
dans lequel la composition présente un potentiel de production de biomasse inférieur ou égal à 500 picogrammes d'adénosine triphosphate d'adénosine triphosphate par centimètre², déterminé selon NEN-EN 16421:2014 méthode 1.

9. Article moulé par injection selon la revendication 8, dans lequel le poly(2,6-diméthyl-1,4-phénylène éther) a une masse moléculaire moyenne en masse de 25 000 à 60 000 grammes/mole.

10. Procédé de régulation de la croissance microbienne pendant le transport ou le stockage de l'eau, le procédé comprenant le transport ou le stockage de l'eau en contact avec une surface ayant une composition comprenant
20 à 70 parties en poids d'un poly(phénylène éther),
30 à 90 parties en poids d'un polystyrène, et
0 à 15 parties en poids d'un copolymère à blocs hydrogénés d'un monomère alcénylaromatique et d'un diène conjugué ;
dans lequel les parties en poids sont rapportées à 100 parties en poids du total du poly(phénylène éther), du polystyrène et du copolymère à blocs hydrogénés.

11. Procédé selon la revendication 10, dans lequel la composition comprend en outre 5 à 100 parties en poids de fibres de verre.

12. Procédé selon la revendication 10 ou 11, dans lequel le poly(phénylène éther) a une masse moléculaire moyenne en masse de 20 000 à 60 000 grammes/mole.

13. Composition, comprenant
30 à 50 parties en poids d'un poly(2,6-diméthyl-1,4-phénylène éther) ayant une viscosité intrinsèque de 0,1 à 0,6 décilitre par gramme, mesurée par un viscosimètre Ubbelohde à 25 °C dans le chloroforme ;
35 à 55 parties en poids d'un homopolystyrène atactique ayant un indice de fluidité de 1 à 5 grammes par 10 minutes, mesuré selon ISO 1133-4(2011) à 200 °C et pour une charge de 5 kilogrammes ;
1 à 15 parties en poids d'un copolymère à blocs hydrogénés d'un monomère alcénylaromatique et d'un diène conjugué ; et
5 à 100 parties en poids de fibres de verre ;
dans lequel les parties en poids sont rapportées à 100 parties en poids du total du poly(phénylène éther), du polystyrène et du copolymère à blocs hydrogénés ;
dans lequel la composition est à l'exclusion d'un polystyrène modifié par un caoutchouc, à l'exclusion de copolymères à blocs non-hydrogénés de styrène et de butadiène, et comprend moins de 1 partie par million en poids de butadiène libre, par rapport au poids total de la composition de couche intérieure ; et
dans lequel la composition présente un potentiel de production de biomasse inférieur ou égal à 500 picogrammes d'adénosine triphosphate d'adénosine triphosphate par centimètre², déterminé selon NEN-EN 16421:2014 méthode 1.

14. Composition selon la revendication 13, dans laquelle le poly(phénylène éther) a une masse moléculaire moyenne en masse de 20 000 à 60 000 grammes/mole.

15. Composition selon l'une des revendications 13 à 14, comprenant
37 à 47 parties en poids du poly(phénylène éther),
42 à 52 parties en poids du polystyrène,
5 à 15 parties en poids du copolymère à blocs hydrogénés, et
5 à 75 parties en poids de fibres de verre.
